# EUROPEAN PATENT SPECIFICATION

(11) **EP 3 098 205 B1**
(45) Date of publication and mention of the grant of the patent: **31.07.2019**
(21) Application number: 15740449.2
(22) Date of filing: 13.01.2015
(51) Int. Cl.: C03B 37/083

(54) **BUSHING FOR MANUFACTURING GLASS FIBER**
BUCHSE ZUR HERSTELLUNG VON GLASFASERN
FILIÈRE POUR LA PRODUCTION DE FIBRES DE VERRE

(30) Priority: 22.01.2014 JP 2014009310
(43) Date of publication of application: 30.11.2016
(73) Proprietor: Tanaka Kikinzoku Kogyo K.K., Chiyoda-ku Tokyo 100-6422 (JP)
(72) Inventor: OSAWA, Ichizou, Isehara-shi Kanagawa 259-1146 (JP); OSAWA, Toshihiro, Isehara-shi Kanagawa 259-1146 (JP)
(74) Representative: Weickmann & Weickmann PartmbB
(86) International application number: PCT/JP2015/050693
(87) International publication number: WO 2015/111468

(56) References cited:
- JP-A- 2010 184 858
- JP-A- 2010 502 543
- JP-U- H0 537 931
- JP-U- H0 537 931
- US-A- 3 068 669
- US-A- 3 607 164

## Description

### TECHNICAL FIELD

The present invention relates to a bushing for manufacturing a glass fiber from molten glass. Further, it relates to a method for manufacturing a glass fiber using the bushing for manufacturing a glass fiber.

### BACKGROUND ART

A glass fiber is manufactured by supplying, to a bushing, a glass basis material, which is obtained by clarifying and homogenizing molten glass that is a glass raw material (cullet) having been heated to high temperatures. The bushing for manufacturing a glass fiber is a box-shaped container having a bushing plate provided at the bottom face. The bushing plate has a plurality of nozzles arranged in lines, attached to the bottom face of a base plate, and the glass basis material is discharged in a fibrous form from the nozzle. The glass fiber discharged from the nozzle is wound while being cooled. An example of a process for manufacturing a glass fiber using the bushing is described in PTL 1.

Since the glass basis material in a molten state is at high temperatures of 1500°C or higher and speed when the glass basis material is discharged from the nozzle is several thousand meters per minute, the use environment of the bushing plate is considerably severe. Further, slight interfusion of impurities is not allowed for glass fibers as products. From these, application of a material having high stability and strength is required for the bushing plate so as not to pollute the glass basis material. In consideration of this point, as a constituent material for the bushing plate, a precious metal material such as platinum or platinum alloy is used. Precious metals and alloys thereof are excellent in chemical stability and high temperature strength, in particular, are good in high temperature creep properties, and are suitable as a constituent material of structures that are subjected to stress loading under high temperatures, such as glass manufacturing apparatuses.

PTL 2 is directed to an apparatus for producing fibers from heat softenable material comprising a bushing adapted to contain a supply of molten material, orifices through one wall of said bushing through which molten material is discharged and a tip for each orifice, said tips being separately spaced, said tips being in the form of tubes, each tube extending outwardly from said bushing wall into the atmosphere, the tips being arranged to provide a continuous grid structure so as to transfer heat by radiation from one tip to the next adjacent tip, at least one heat radiating member extending outwardly from said bushing wall, said members being opaque to radiant heat, said member spaced apart from said grid, said member disposed between said tips and the atmosphere.

PTL 3 relates to an apparatus for producing glass filaments which has an array of orificed tips through which streams of molten glass are flowed and then attenuated into filaments. A uniform filament-forming environment is attained by employment of solid heat-radiating tips to thermally shield certain active array boundary tips from the influences of a cooler ambient atmosphere.

PTL 4 relates to a glass fiber manufacturing apparatus comprising a rectangular bushing plate to which a large number of nozzles are attached. A large number of filaments are formed by flowing out molten glass from a nozzle of the bushing plate. Said apparatus is characterized therein than an airflow regulating member for preventing an accompanying air flow caused by pulling out the filament from hitting the nozzle is provided below the two side edges.

### CITATION LIST

### PATENT LITERATURE

PTL 1: Published Japanese translation of PCT patent application No. 2001-513478
PTL 2: US 3,068,669 A
PTL 3: US 3,607,164 A
PTL 4: JPH05 37931 U

### SUMMARY OF INVENTION

### TECHNICAL PROBLEM

Up to now, a lot of examinations have been done on a platinum-based material that is a constituent material of a glass manufacturing apparatus, which are also fed back to bushing plates for manufacturing glass. Accordingly, such design has been carried out that assures a sufficient period of use even under the severe use environment as described above. However, according to the present inventors, existence of a damage example beyond expectation is confirmed in a bushing plate for manufacturing glass.

In particular, as a damage example of a bushing plate, for a nozzle array being the outermost layer of nozzles arranged in lines, damage considered to be caused by abrasion is confirmed at the tip part of the nozzle. Such damage of a nozzle hinders stable manufacturing of a glass fiber even if it is generated in a part of nozzles.

Consequently, it is an object of the present invention to provide a bushing plate for manufacturing a glass fiber that can suppress the damage of a nozzle as described above.

### SOLUTION TO PROBLEM

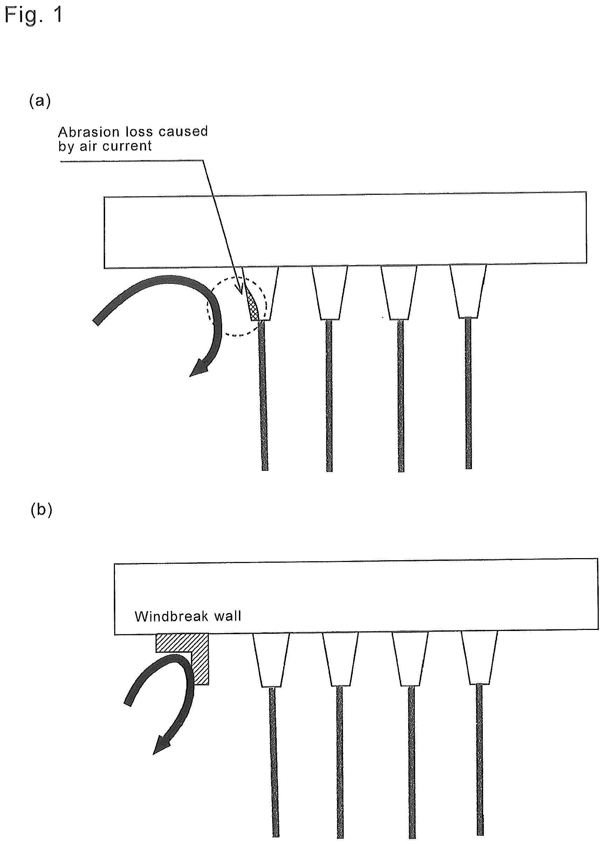

In order to solve the above-described problem, first, the present inventors examined causes of the above-described damage of the nozzle. What is given first priority as a factor of abrasion of the nozzle is abrasion caused by volatilization of platinum. As described above, the glass basis material supplied to the bushing plate is at high temperatures of 1500°C or higher. Volatilization loss of platinum in platinum or platinum alloys generated under such high temperatures is conventionally known also in the field of glass manufacturing. However, even if the volatilization loss of platinum is the factor of damage of the nozzle, the volatilization loss alone may not lead to selective damage in the nozzle array of the outermost layer. Thus, the present inventors considered furthermore, and, as the result, guessed that a flow of air (air current) around the bushing plate accelerated the abrasion in the nozzle array of the outermost layer. As described above, the discharge speed of fibrous glass from the nozzle is several thousand meters per minute, and, around the bushing plate from which a glass fiber at high temperatures is discharged at such high speed, a high-speed air current along the glass discharge direction is generated. Further, what is most susceptible to the influence of the air current is the tip part of the nozzle of the outermost layer, and it is considered that the volatilization loss of platinum is accelerated at the site caused by the air current, and that the abrasion is generated (Fig. 1(a)).

On the basis of the above-described consideration, the present inventors considered that the abrasion of the nozzle can be suppressed by protecting the nozzle array of the outermost layer among nozzles arranged in lines from the air current to thereby conceive the present invention (Fig. 1(b)).

That is, the present invention is a bushing plate for manufacturing a glass fiber, including a base plate and a nozzle for discharging molten glass, the nozzle being arranged in lines in a plurality of numbers on the base plate to thereby form nozzle arrays, wherein a windbreak wall projecting from a surface of the base plate is installed along a nozzle array of the outermost layer of the nozzles arranged in lines.

As described above, the bushing plate for manufacturing a glass fiber according to the present invention is one in which a windbreak wall for protecting the nozzle of the outermost layer of nozzles arranged in lines from an air current is installed. Accordingly, other configurations (base plate, nozzle main body) are basically the same as those of conventional bushing plates.

The base plate is a member for retaining the glass basis material in a molten state, and has a plate shape or a box shape by bending processing. The base plate is provided with a through hole in a connecting position with the nozzle. Material of the base plate is composed of platinum or platinum alloy, and, preferably, in addition to platinum or platinum - rhodium alloy (rhodium concentration: 5 to 20 wt%), dispersion strengthened platinum alloy or dispersion strengthened platinum - rhodium alloy is applied for the purpose of improving strength.

The nozzle is a cylindrical tubular body, and is arranged in lines in a plurality of numbers and joined to the bottom face of the base plate. The installation number of nozzles in a bushing plate for manufacturing a glass fiber is not particularly limited, but, usually, many plates are provided with from 200 to 8000 nozzles. The shape of the nozzle is also not particularly limited, and the nozzle may be a straight tube or a tapered tubular body. Platinum or above-described platinum alloy is also applied to the material of the nozzle.

Further, in the present invention, the windbreak wall installed on the base plate along the nozzle array of the outermost layer is provided. The windbreak wall is one for protecting the nozzle of the outermost layer from shock of air caused by the air current. Here, the height of the windbreak wall is higher than the height of the nozzle of the outermost layer by from 0.1 mm to 20.0 mm. From the viewpoint of protecting the nozzle from the air current, the height of the windbreak wall is preferably higher than the height of the nozzle. On the other hand, air around the bushing plate functions as a cooling medium for cooling the entire nozzles, and, if air does not enter an installation region of the nozzle at all, damage caused by overheating of the nozzle is feared. When the height of a windbreak wall is too high, generation of such state is conceivable, and, therefore, the height of the windbreak wall is preferably limited as described above.

As to the shape of the windbreak wall, one that covers thoroughly the nozzle array may be installed. However, taking account of sending air to be a cooling medium into the above-described entire nozzles, a windbreak wall provided with a notch at a site corresponding to the gap between nozzles is preferable. By suitably arranging notches, air is allowed to enter the installation region of nozzles while suppressing damage of the nozzle by the air current. When dividing a windbreak wall into sections by providing such notches, as to the width of respective windbreak walls, it is preferable to secure a width of approximately the same to plus 5.0 mm relative to the width of the nozzle. As to the shape of the notch, both rectangle and wedge are acceptable.

Further, the windbreak wall may be one formed from a seamless plate material, but may be formed from a plurality of members. For example, a windbreak wall of a two-piece configuration can be applied, in which windbreak plates are sequentially joined, in places corresponding to nozzle positions, to a thin plate-like base material to be joined to the base plate along a nozzle array. By configuring the windbreak plate from such a plurality of members, for example, in a case where a part of windbreak plates are abraded or damaged by the air current or the like, a partial repair becomes possible.

Meanwhile, the installation position of the windbreak wall is preferably set so that the distance between the nozzle-side end face of the windbreak wall and the center line of the nozzle of the outermost layer is from 1 mm to 50 mm. Because, when the distance is too small, the wall interferes with the nozzle, and, when the distance is too large, it does not exert a windbreak effect and can not suppress damage of the nozzle. The thickness of the windbreak wall is preferably set to be from 0.1 mm to 10 mm. When it is too small, it is easily damaged and has no effect as the windbreak wall, and, on the other hand, when it is too large, it causes increase in weight of the entire bushing plate.

As to material of the windbreak wall, it is preferably configured from platinum or platinum alloy, in the same way as the base plate and the nozzle. It is because the windbreak wall is also exposed to high temperature circumstances. The joining of the windbreak wall with the base plate is preferably carried out by welding.

### ADVANTAGEOUS EFFECTS OF INVENTION

As explained hereinbefore, in the bushing plate for manufacturing a glass fiber according to the present invention, the windbreak wall is installed on a conventional bushing plate, and thereby conventionally-generated abrasion or damage of the nozzle of the outermost layer can be suppressed. Consequently, the period of use of a glass manufacturing apparatus can be extended, and stable manufacturing of a glass fiber can be carried out.

### BRIEF DESCRIPTION OF DRAWINGS

Fig. 1 is a view illustrating an abrasion state of the tip of a nozzle of the outermost layer caused by an air current.
Fig. 2 is an external view of a bushing plate for manufacturing a glass fiber according to the embodiment.
Fig. 3 is a view illustrating the configuration of a windbreak wall in the embodiment.
Fig. 4 is a cross-sectional view near the windbreak wall of the bushing plate for manufacturing a glass fiber according to the embodiment.
Fig. 5 is a view illustrating another configuration of the windbreak wall.
Fig. 6 is a view illustrating another form of a cross-sectional shape about the windbreak wall.

### DESCRIPTION OF EMBODIMENTS

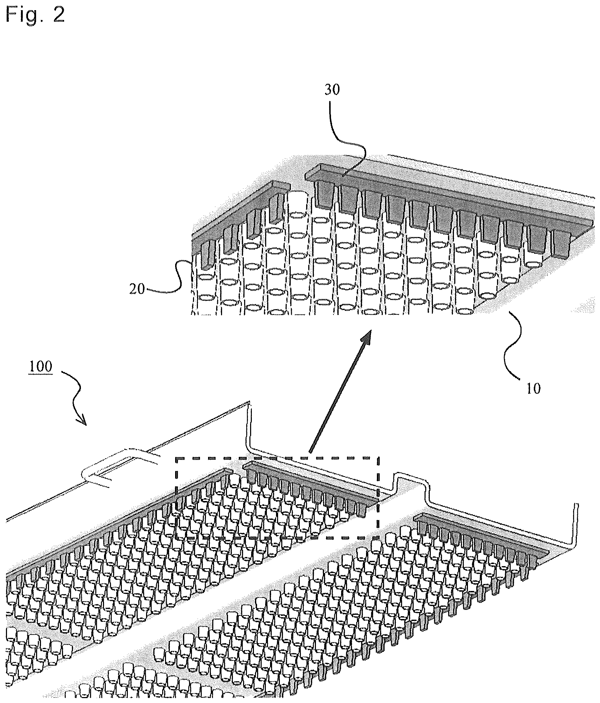

Hereinafter, the embodiment of the present invention will be explained. Fig. 2 roughly illustrates a bushing plate for manufacturing a glass fiber 100 according to the embodiment. In Fig. 2, the bushing plate for manufacturing a glass fiber is provided with a base plate 10 and a plurality of nozzles 20 arranged in lines at the bottom face of the plate.

The base plate 10 is formed by subjecting a plate material (1.5 mm in thickness) made of platinum to bending processing, and is processed by bending end parts while providing a convex part in the center (bottom face dimension: 444 mm × 120 mm). The reason why the convex part is provided in the center is to rectify a molten glass basis material flowing from the upper side.

The nozzle 20 is a tapered cylindrical tubular body having thickness of 0.35 mm, and 1.65 mm (inner diameter) × 2.94 mm (top part outer diameter) × 2.35 mm (bottom part outer diameter), which is made of platinum. The nozzle 20 is attached to the base plate 10 in the number of 60 × 24, that is, 1440 in total at 6.4 mm intervals. As to the attachment of the nozzles 20 to the base plate 10, holes of 2.81 mm were previously bored at sites of the base plate 10 to which the nozzles were to be attached, into which the nozzle 20 was penetrated, expanded tubewise, and closely contacted and fixed.

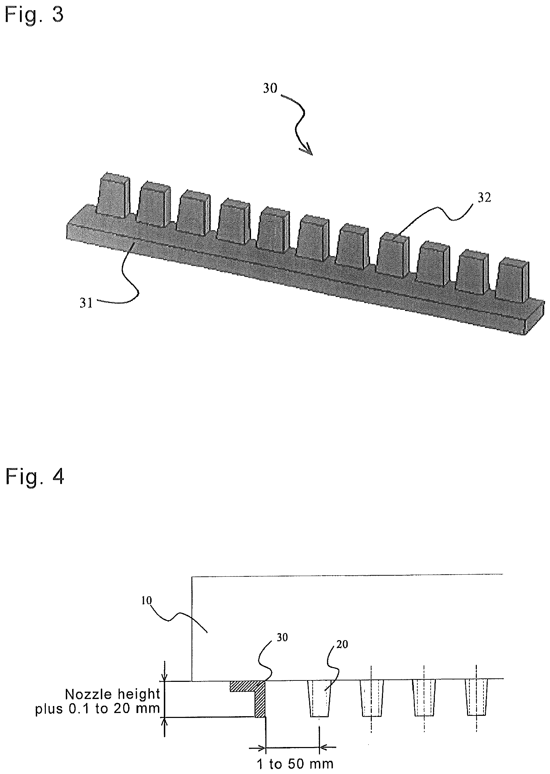

Further, the bushing plate for manufacturing a glass fiber 100 is provided with a windbreak wall 30 along the nozzle array of the outermost layer of the nozzle group arranged in lines as described above. Fig. 3 shows the external view of the windbreak wall 30. The windbreak wall 30 of the embodiment is configured from a combination of a flat plate rod-shaped base member 31 of 1.5 mm in thickness to be joined to the base plate and a plurality of windbreak plates 32 (thickness 1.0 mm, height 5.0 mm) installed on the positions corresponding to installation positions of nozzles. As to the material of the windbreak wall, both members are made of platinum. The windbreak wall was produced by previously producing a member in which the windbreak plates 32 were sequentially welded to the base member 31, and by welding the same to the base plate. At this time, the distance between the wall face of a windbreak member (nozzle side) and a nozzle was set to be 6.4 mm. A cross-sectional view of a bushing plate for manufacturing a glass fiber, in which the windbreak wall 30 is installed, is shown in Fig. 4.

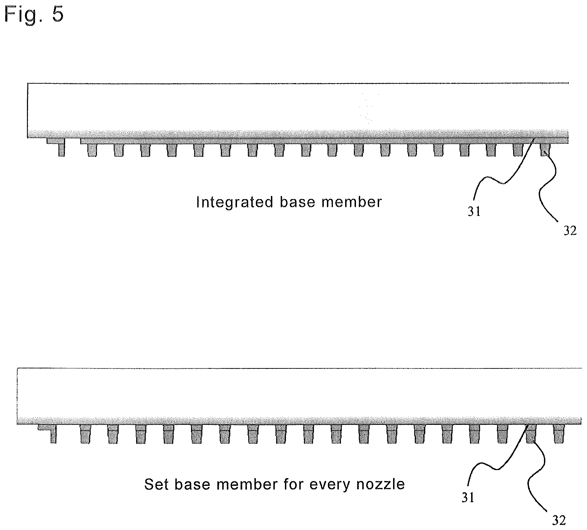

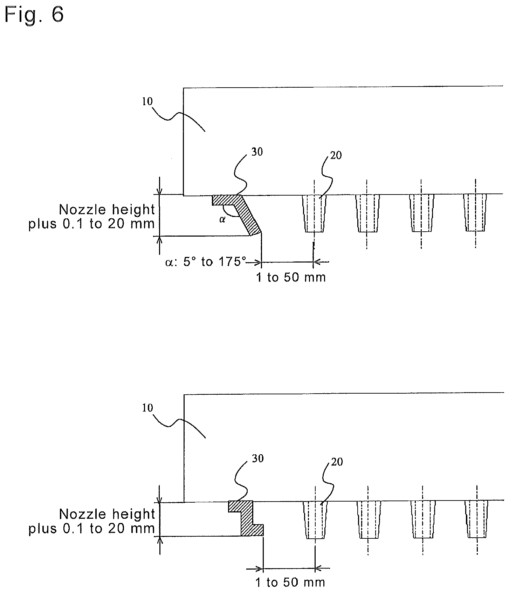

Meanwhile, as to the form of the windbreak wall 30, in addition to one in which a plurality of windbreak plates are joined to one common base material as shown in Fig. 3, it may also be possible to prepare a base member divided into sections corresponding to nozzles and to form the windbreak wall individually (Fig. 5). Further, also as to the cross-sectional shape of the windbreak wall, in addition to one having a vertical windbreak face as shown in Fig. 4, those having an inclined windbreak face or a zigzag shape can be applied (Fig. 6). The windbreak wall aims at suppressing the contact of the air current flowing from the bushing outer circumference to the nozzle array, and the cross-sectional shape thereof is not limited. In addition to those shown in Fig. 6, a columnar windbreak wall may also be usable.

As a manufacturing example of a glass fiber using the bushing plate for manufacturing a glass fiber according to the embodiment, first, a terminal and a box-shaped side flange are joined to the bushing plate to thereby configure a bushing being a box-shaped container. The bushing is incorporated into a glass manufacturing apparatus. The glass manufacturing apparatus is provided with a melting tank of a glass raw material compounded according to a target composition, a clarifying tank of the molten glass and a stirring tank stirring and homogenizing the clarified molten glass, and the bushing is installed on the downstream side of these. A glass fiber discharged from the bushing is wound appropriately.

Here, with a glass manufacturing apparatus provided with the bushing plate for manufacturing a glass fiber according to the embodiment shown in Fig. 2, glass fiber manufacturing was carried out for one year. During the period, remarkable abnormality was not found out in the bushing plate. Further, after the one-year operation of the apparatus, the apparatus was shut down and nozzles of the bushing plate were checked, and no abrasion was found out in all nozzles.

### INDUSTRIAL APPLICABILITY

The bushing plate for manufacturing a glass fiber according to the present invention suppresses abrasion damage of a nozzle group provided at the bottom face by installing the windbreak wall. According to the present invention, a stable operation of a glass manufacturing apparatus for a long operation period can be made possible, and a good-quality glass fiber can be manufactured effectively.

## Claims

1. A bushing for manufacturing a glass fiber, comprising:
a base plate (10) and a nozzle (20) for discharging molten glass, the nozzle (20) being arranged in lines in a plurality of numbers on the base plate (10) to thereby form nozzle arrays, wherein
a windbreak wall (30) projecting from a surface of the base plate (10) is installed along a nozzle array of an outermost layer of the nozzles arranged in lines, wherein a height of the windbreak wall (30) is higher than that of the nozzle (20) by from 0.1 mm to 20.0 mm, and wherein the windbreak wall (30) has a notch at a site corresponding to a gap between nozzles (20) of the nozzle array.

2. The bushing for manufacturing a glass fiber according to claim 1, wherein a distance between an end face of the windbreak wall (30) and a nozzle center of the nozzle array of the outermost layer is from 1 mm to 50 mm.

## Patentansprüche

1. Buchse zur Herstellung von Glasfaser, welche aufweist:
eine Basisplatte (10) und eine Düse (20) zum Abgeben von Glasschmelze, wobei die Düse (20) auf der Basisplatte (10) in einer Mehrzahl in Linien angeordnet ist, um hierdurch Düsenfelder zu bilden, wobei
eine Windschutzwand (30), die von einer Oberfläche der Basisplatte (10) vorsteht, entlang eines Düsenfelds einer äußersten Ebene der in Linien angeordneten Düsen installiert ist, wobei eine Höhe der Windschutzwand (30) um von 0,1 mm bis 20,0 mm höher ist als jene der Düse (20), und wobei die Windschutzwand (30) eine Kerbe an einer Stelle aufweist, die einer Lücke zwischen Düsen (20) des Düsenfelds entspricht.

2. Die Buchse zur Herstellung von Glasfaser nach Anspruch 1, wobei ein Abstand zwischen einer Endfläche der Windschutzwand (30) und einer Düsenmitte des Düsenfelds der äußersten Ebene von 1 mm bis 50 mm beträgt.

## Revendications

1. Filière pour fabriquer une fibre de verre, comprenant :
une plaque de base (10) et une buse (20) pour décharger du verre fondu, la buse (20) étant agencée en lignes en une pluralité de nombres sur la plaque de base (10) pour ainsi former des réseaux de buses, dans laquelle
une paroi pare-vent (30) faisant saillie à partir d'une surface de la plaque de base (10) est installée le long d'un réseau de buses d'une couche la plus externe des buses agencées en lignes, dans laquelle une hauteur de la paroi pare-vent (30) est supérieure à celle de la buse (20) de 0,1 mm à 20,0 mm, et dans laquelle la paroi pare-vent (30) présente une encoche au niveau d'un site correspondant à un espacement entre les buses (20) du réseau de buses.

2. Filière pour fabriquer une fibre de verre selon la revendication 1, dans laquelle une distance entre une face terminale de la paroi pare-vent (30) et un centre de buses du réseau de buses de la couche la plus externe va de 1 mm à 50 mm.
